# EUROPEAN PATENT APPLICATION

(11) **EP 2 159 622 A1**
(43) Date of publication of application: **03.03.2010**
(21) Application number: 09169011.5
(22) Date of filing: 31.08.2009
(51) Int. Cl.: G02B 27/28, G02B 6/27, G02F 1/21, G02F 1/31, H04B 10/135, H04B 10/155

(54) **Apparatus and method for stabilizing polarization state**

(30) Priority: 01.09.2008 JP 2008223905
(71) Applicant: Fujitsu Limited, Kawasaki-shi, Kanagawa 211-8588 (JP)
(72) Inventor: Futami, Fumio, Kanagawa 211-8588 (JP); Watanabe, Shigeki, Kanagawa 211-8588 (JP)
(74) Representative: HOFFMANN EITLE

(57) **Abstract**

An apparatus includes: a polarizing beam splitter for splitting the input light into a first light and a second light and for outputting the first light and the second light into optical paths, respectively; a polarization rotator rotating polarized light of the light path by approximately 90 degree; a first path length adjuster adjusting a difference path length between the optical paths in order to be approximately equal to zero; a second path length adjuster adjusting a difference path length between the optical paths in order to be an integer multiple of a wavelength of the input light; an optical attenuator arranged adjusting a propagation loss of the optical path in order to approximately match the propagation losses of the optical paths; and an output element for combining the first light and the second light from the paths and for outputting the output light.

## Description

### FIELD

The embodiments discussed herein are related to an optical communication technology for stabilizing a polarization state of light signal.

### BACKGROUND

Hitherto, light employed for optical communication has a high degree of polarization. A polarization state changes depending on a change in transmission path condition caused by an environmental variation such as a change in air temperature in an optical fiber etc. Therefore, a polarization-independent operation that operates without depending on the polarization state of signal light is demanded for an optical element or an optical part including an optical signal processing element, employed for optical communication.

Currently, there are a large number of optical elements or optical parts whose operation depends on the polarization state of the signal light. For a proper operation of the optical element or optical part having the polarization dependence, it is indispensable that polarization of the signal light inputted to the optical element or optical part is set into a proper state for the operation.

There are two main methods for realizing the above-mentioned operation. A first polarization control method is that the polarization state of light is actively controlled, is converted into a desired polarization state, and is thereafter inputted to the optical element or optical part. A second polarization control method is so-called polarization diversity. In the method, two optical elements or two optical parts are prepared, light in an arbitrary polarization state is split into two perpendicular components, each polarization component is inputted to the optical element or optical part in an optimum polarization state, and the two outputted perpendicular polarization components are combined again.

There are various proposed related arts that an arbitrary polarization state is actively controlled to a specific polarization state, as the above-mentioned first polarization control method.
In the fundamental related art of the first polarization control method, first, the polarization state of light is monitored by a polarimeter and the polarization state is converted into a desired state and is outputted through a polarization controller. The following first and second related arts are well-known as technologies for specifically realizing the above method.

In the first related art, the polarimeter is connected to the later part of the polarization controller. The polarization state of light to be outputted is monitored by the polarimeter, the polarization state of light is controlled by the polarization controller, and the light is converged into a desired output polarization state.

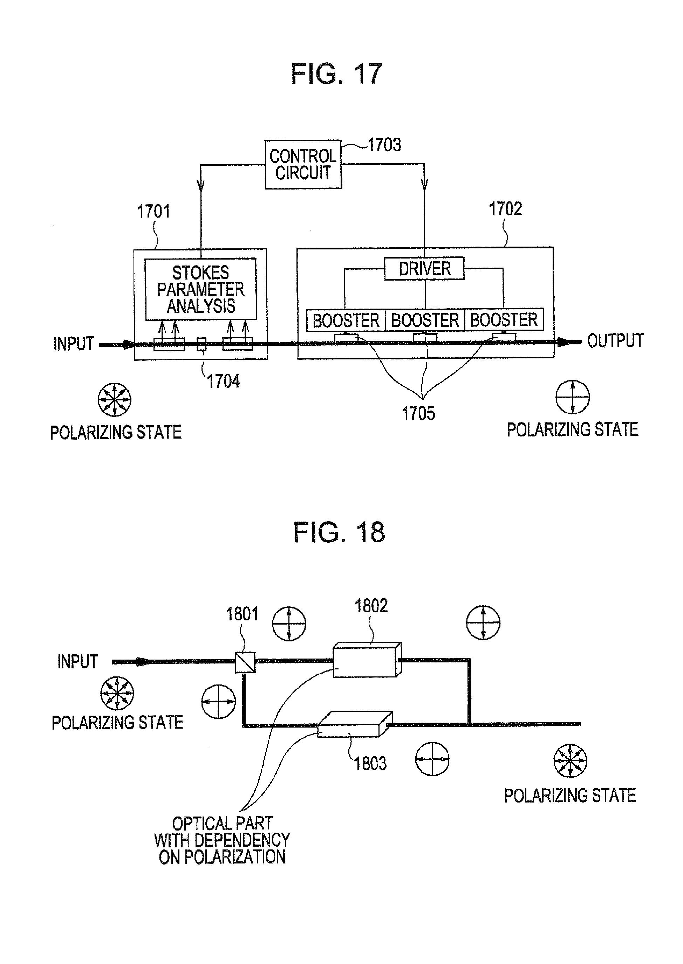

In the second related art illustrated in Fig. 17, a polarization controller 1702 having piezo elements 1705 is connected to the later part of a polarimeter 1701 having a λ/4-wavelength plate 1704. The polarimeter 1701 monitors and analyzes the polarization state of light, thereby extracting a Stokes parameter. Subsequently, a control circuit 1703 calculates Jones matrix for converting the light into a desired output polarization state. The polarization controller 1702 executes converting processing of the Jones matrix and converts the polarization state.

An example of a product based on such a method is illustrated as follows:
(1) Thorlabs Products (United States)
   : Deterministic Polarization Controller - DPC5500
(2) General Photonics Products (United State)
   : RESET-FREE POLARIZATION STABILIZER PolaStay (registered mark in United States).
   Subsequently, with the technology of the polarization diversity as the above-mentioned second polarization control method, as illustrated in Fig. 18, a polarization splitter 1801 splits input light into two polarization components perpendicular to each other. Two optical parts 1802 and 1803 each having a polarization dependency are prepared for the polarization components. The optical parts are set into proper polarization and receive the polarization light components. The light outputted from the two optical parts 1802 and 1803 is combined and is outputted at an output part.
   There is a Japanese Laid-open Patent Publication No. 2007-264319 as a related art.

However, in the first related art as the above-mentioned first polarization control method, there is a problem that a high-speed responsability is limited due to a time required for putting the polarization state in the desired state.
On the other hand, in the second related art as the above-mentioned second polarization control method, since the polarization state is converted on the basis of the Jones matrix, it may not need the time for putting the polarization state in a desired state, required for the above-mentioned first related art. Therefore, the high-speed operation becomes possible. It is a main containment for the high-speed operation in the second related art that a time is required for calculating the Jones matrix. Although depending on precision of an output polarization state, the response time requires approximately milliseconds and the higher speed operation than that is difficult. The second related art has a problem that a control circuit and the polarized wave controller 1702 are required for performing the active control and the structure becomes complex. Further, the second related art has the following problem. Both of the polarimeter 1701 and the polarization controller 1702 may control light with one wavelength. Therefore, it may not be performed that the polarization states of light with different wavelengths are converted into a desired polarization state in a lump. This technology may not be applied to Wavelength Division Multiplexing (WDM), etc.

On the other hand, with the polarization diversity technology as the above-mentioned second polarization control method, even if the optical elements or the optical parts (1802 and 1803 in Fig. 18) operate for the light having a multiwavelength, the multiwavelength light can be simultaneously treated. The technology differs from the active control system with the above-mentioned first polarization control method and does not have the limitation of high-speed response. However, in the polarization diversity technology, there is a problem that the two optical elements or two optical parts are required and the structure becomes complex or the apparatus becomes large in scale.

The description is made for the two related arts that the optical element or the optical part having the polarization dependence is operated for the light in an arbitrary polarization state. The structure of polarization diversity has the problem that the two optical elements or the two optical parts may be required and the apparatus structure becomes complex.

### SUMMARY

Accordingly, it is an object in one aspect of the invention to provide an apparatus for converting input light into a desired polarization state in independence from change speed of the polarization state.

According to an aspect of the invention, an apparatus for outputting an outputting light having constant polarization state independently from any polarization state of an input light, the apparatus includes: a polarizing beam splitter for splitting the input light into a first light and a second light and for outputting the first light and the second light into optical paths, respectively, the first light having a first polarization, the second light having a second polarization having a perpendicular polarization direction to the first polarization; a polarization rotator arranged in one of the optical paths and rotating polarized light of the light path by approximately 90 degree; a first path length adjuster arranged in one of the optical paths and adjusting a difference path length between the optical paths in order to be approximately equal to zero; a second path length adjuster arranged in one of the optical paths and adjusting a difference path length between the optical paths in order to be an integer multiple of a wavelength of the input light; an optical attenuator arranged in one of the optical paths and adjusting a propagation loss of the optical path in order to approximately match the propagation losses of the optical paths; an output element for combining the first light and the second light from the paths and for outputting the output light.

### BRIEF DESCRIPTION OF DRAWINGS

Fig. 1 is a diagram illustrating a structure according to the first embodiment.
Fig. 2 is an explanatory diagram (No. 1) of an operation according to the first embodiment.
Figs. 3A and 3B are an explanatory diagram (No. 2) of an operation according to the first embodiment.
Figs. 4A and 4B are an explanatory diagram (No. 3) of an operation according to the first embodiment.
Fig. 5 is a diagram illustrating a structure according to a modification of the first embodiment.
Fig. 6 is a diagram illustrating a structure according to the second embodiment.
Fig. 7 is a diagram illustrating a structure according to the third embodiment.
Fig. 8 is a diagram illustrating an example of a structure of a power controller 702.
Fig. 9 is a diagram illustrating a modification of Fig. 8.
Fig. 10 is a diagram illustrating another modification of Figs. 8 and 9.
Fig. 11 is a diagram illustrating a structure according to the fourth embodiment.
Fig. 12 is a diagram illustrating a structure according to the fifth embodiment.
Fig. 13 is a diagram illustrating a structure according to the sixth embodiment.
Fig. 14 is a diagram illustrating a structure according to the seventh embodiment.
Fig. 15 is a diagram illustrating a structure according to the eighth embodiment.
Fig. 16 is a diagram illustrating a structure according to the ninth embodiment.
Fig. 17 is a diagram illustrating a structure according to a second related art.
Fig. 18 is a diagram illustrating polarization diversity according to a related art.

### DESCRIPTION OF EMBODIMENTS

Hereinbelow, embodiments will be described by referring drawings.

### [First embodiment]

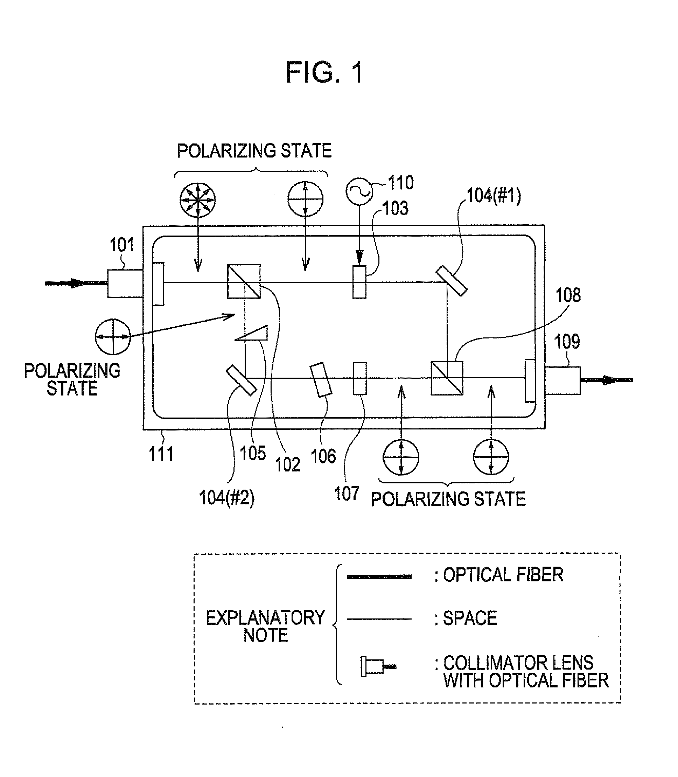

Fig. 1 is a diagram illustrating the structure according to the first embodiment.

Light collimated at a collimator lens 101 with an optical fiber is inputted into an optical module 111. The light passes optical devices arranged in the optical module 111. The light passed optical devices is collected by a collimator lens 109 with an optical fiber. The collected light is outputted from the optical fiber.

The optical module 111 includes a polarizing beam splitter (PBS) 102, a liquid crystal optical modulator (LCM) 103, two total-reflection mirrors 104#1 and 104#2, an optical attenuator 105, an optical path length adjuster 106, a polarizing rotation element 107, and a polarization independence beam combiner (BC) 108.

Hereinbelow, the operation with the structure illustrated in Fig. 1 will be illustrated.
Light outputted from an optical fiber is converted into parallel light beams with the collimator lens 101 with optical fiber for input. The collimated light is developed into the optical module 111.

The polarizing beam splitter 102 splits the input light into two components of a TM polarization component and a TE polarization component, and guides the two components to two different paths.
The polarizing beam splitter 102 includes two right angle prisms. One of right angle prism has a coating on an inclined plane, the coating made by a dielectric multilayer film or metallic thin film. Other right angle prism has an inclined plane. The inclined plane of other right angle prism is adhered to the inclined plane of the right angle prism by an organic material type adhesive.

Although the polarizing beam splitter 102 is employed herein. The polarizing beam splitter may change another member, e.g., uniaxial birefringent crystal, can be used to realize a function for orthogonally splitting the light into two polarized light.

In Fig. 1, upper optical path is defined as a path 1. Light guided to the path 1 is TM polarized light. Lower optical path is defined as a path 2. Light guided to the path 2 is TE polarized light.
In the path 1, the liquid crystal optical modulator 103 finely adjusts a length of optical path for propagating the TM polarized light with accuracy, e.g., nanometer level. The operation principle will be described later.

The light outputted from the liquid crystal optical modulator 103 is reflected by the totai-reflection mirror 104(#1). Thereafter, the light as the TM polarized light passes through the polarization independence beam combiner 108, and is guided to the collimator lens 109 with optical fiber for output. The total-reflection mirror 104 is realized with a metallic mirror formed by deposition of metal such as aluminum on a glass substrate or with coating of a dielectric film.

The optical attenuator 105 adjusts optical power of the TE polarized light guided to the path 2. The total-reflection mirror 104 (#2) is arranged after the optical attenuator 105. In addition, the total-reflection mirror 104 (#2) reflects the TE polarized light. The optical path length adjuster 106 is arranged after the total-reflection mirror 104 (#2). The optical path length adjuster 106 performs coarse adjustment of the propagating length of the light. The polarizing rotation element 107 converts the TE polarized light into the TM polarized light. The polarization independence beam combiner 108 combines the light from the light propagated through the path 1 and the path 2. The resultant light of the polarization independence beam combiner 108 is outputted to the collimator lens 109 with optical fiber for output.

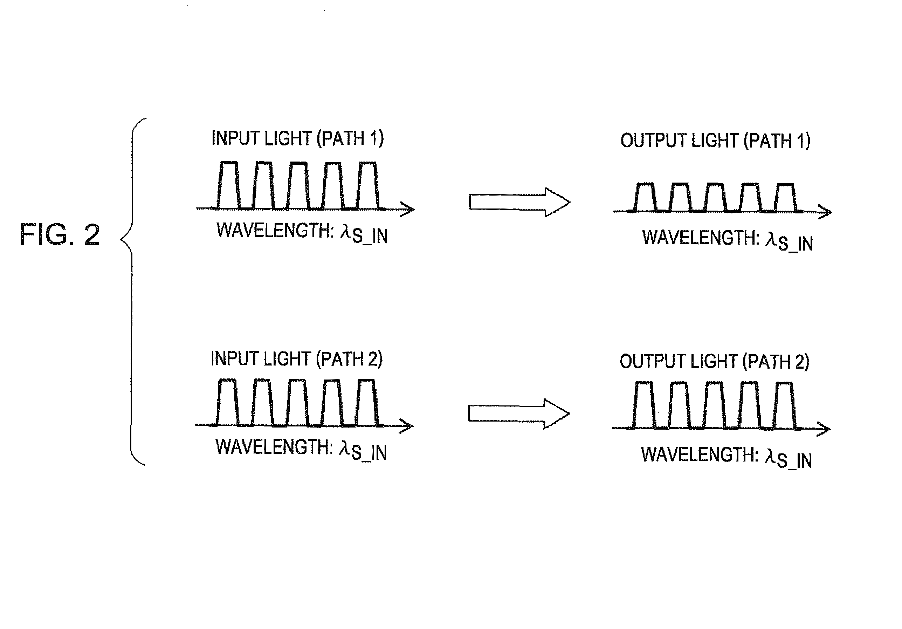

When the polarization independence beam combiner 108 combines the light propagated through the path 1 and path 2, it is required to set the amplitudes and the phases of both the light to be equal to each other (with the inphase situation).
When the amplitudes are not identical to each other, as illustrated in Fig. 2, the amplitude of the output light is changed by the polarization state of the input light the input light and the polarization dependent loss occurs.
When the light is not inphase, the amplitude of the output light may be reduced. Further, when the phase is reversed, i.e., is shifted at an angle of 90 degrees, the light may not be outputted.

In order to set the amplitudes of both the output light through the path 1 and path 2 to be identical to each other, the amount of attenuation of the optical attenuator 105 is adjusted so as to set the propagation loss of the path 2 to be identical to the propagation loss of the path 1. Referring to Fig. 1, the optical attenuator 105 is arranged to the path 2. However, if the propagation loss of the path 2 without the optical attenuator 105 is larger than the propagation loss of the path 1, the optical attenuator 105 is disposed on the path 1 and the propagation loss of the path 1 may increase so as to match the propagation loss of the path 2. The optical attenuator 105 is made a glass having wedge shape as illustrated in Fig. 1. The glass is the crystal doped impurity. In addition, a function of adjusting optical path length can be realized by adjusting the length for propagating the light in the glass.

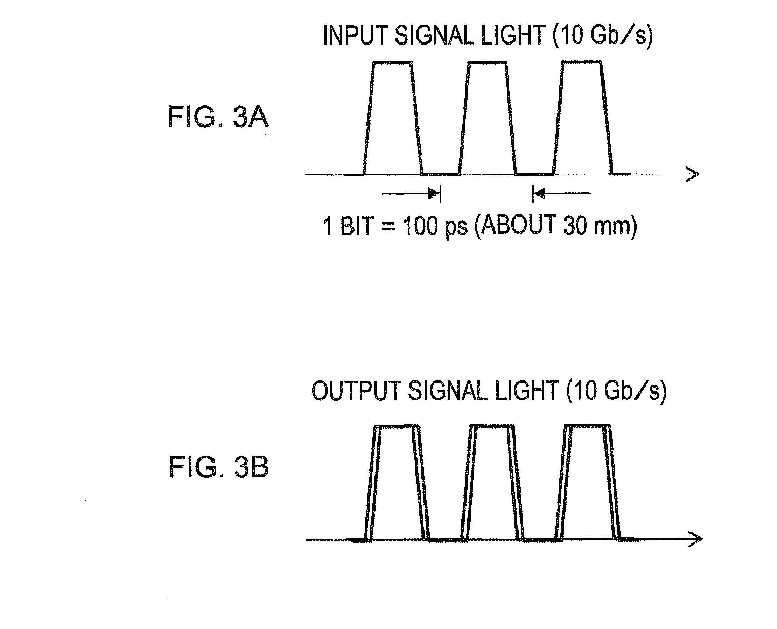

The lengths of the two paths may not be identical to each other. The accuracy for adjusting is variably on the bases of the input light. For example, when the light modulated by non-return-to-zero (NRZ) signal has a transmission rate of 10Gb/s, the signal interval is 100 ps and the space is around. Therefore, the optical path length may be adjusted to be substantially shorter than the above-mentioned one. If this condition is satisfied, in the case of input signal light illustrated in Fig. 3A, the difference between the optical path lengths is not just zero but the difference between the optical path lengths is approximately zero. In that case, output signal light is as illustrated in Fig. 3B and information is not lost. The adjustment with such a degree may be realized by adjusting an angle to the optical path of the glass plate having parallel surfaces as the optical path length adjuster 106 arranged in the path 2. More specifically, the adjustment with such a degree may be realized by changing the length of light propagation in the glass plate.
The effective propagation length of the light in the glass plate may not be adjusted by adjusting the angle, and an optical path length adjusting function may be disposed to the path 1. For example, the optical path length adjuster 106 is formed a wedge shaped glass member, and adjusts the difference between the individual optical path lengths of the two paths to be approximately equal to zero by adjusting the passage position of the light on the glass member.

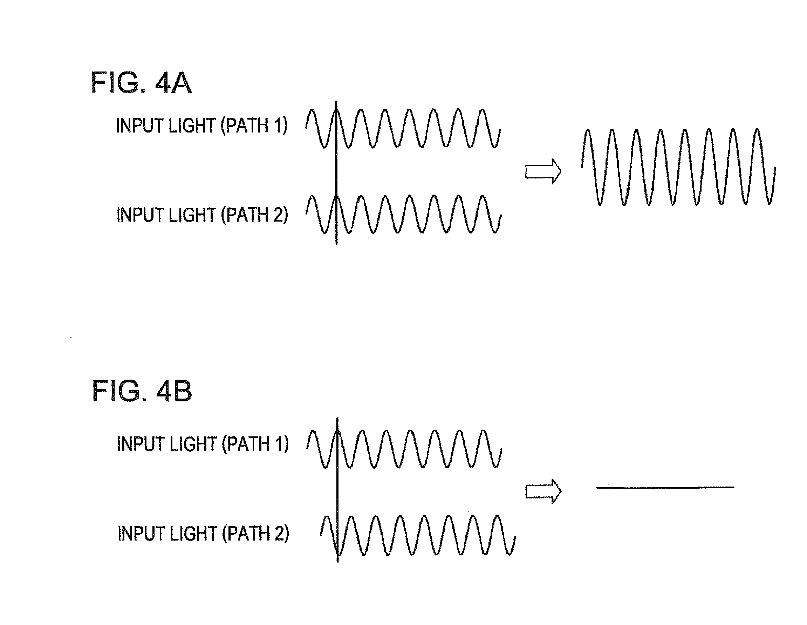

On the other hand, combining light by the polarization independence beam combiner 108, it is necessary to accurately control the difference between the two optical paths to be an integer multiple of the wavelength with accuracy of the phase of the light in order to deaden the combined light by the optical interference, as illustrated in Fig. 4A,
As an example, when the difference between the paths is an odd multiple of a half wavelength as illustrated in Fig. 4B, that is, when the light through the paths interferes mutually with a reverse phase thereof, an output obtained by combining the light is approximately zero. Then, as illustrated in Fig. 4A, a combined output light from the polarization independence beam combiner 108 is strong in that the light from the path 1 and 2 interfere in phase

This control operation can be realized by the liquid crystal optical modulator 103. The liquid crystal optical modulator 103 applies an electro-optic effect with which an arrangement state of the liquid crystal molecules changes depending on an electric field from outside. Those electro-optic effect is used for a display device typically for example, a liquid crystal display, a spatial optical modulator formed by disposing a plurality of electrodes for controlling the liquid crystal on the plane, and optical information processing characterized by optical waveform control and high-speed parallel processing. Although being disposed in Programmable femtosecond pulse shaping by use of a multielement liquid-crystal phase modulator: A. M. Weiner, pp. 326-328, Optics Letters, Viol. 15, No.16, 1990, this control operation is not used in order to adjust an effective propagation distance of light and control the combination of light like the embodiments.

The liquid crystal molecules are sandwiched by a glass substrate, and an AC voltage outputted by an AC power source 110 is applied to the transparent electrode attached to the glass substrate. Then, the orientation plane of the liquid crystal molecules is rotated in accordance with the amplitude of the applied voltage, and the effective index of the liquid crystal optical modulator 103 is changed. As a result, the effective path length of the light is changed. With nematic liquid crystal oriented to cause the change in index of refraction vertically to the polarization plane of the light, the effective length is controlled with the accuracy (nanometer) of the wavelength without changing the polarization state of the light with low loss.

The polarizing rotation element 107 changes the polarization state from the TE polarized light into the TM polarized light in the path 2. More specifically, the polarizing rotation element 107 rotates linear polarized light at an angle of 90 degrees. For example, a thin plate containing birefringent crystal called a half-wavelength plate or Faraday rotator may use for the polarizing rotation element 107.

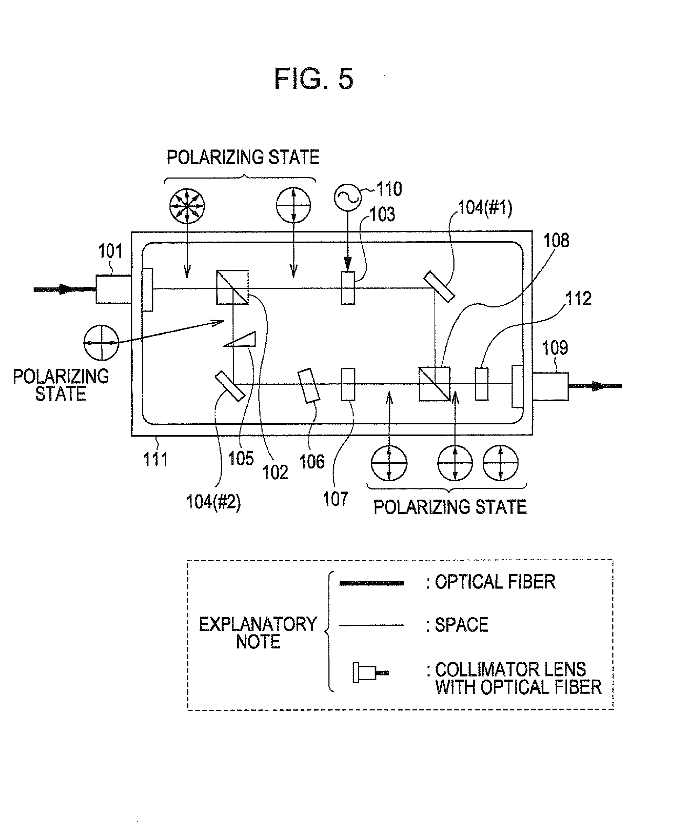

The collimator lens 109 with optical fiber for output may have a polarization-holding-type optical fiber, thereby keeping an output polarization state in constant in the optical fiber. Further, when the polarization states of the light propagated through the two paths and combined are not necessarily identical to each other, as illustrated in Fig. 5, a polarizer 112 is disposed at the latter part of the polarization independence beam combiner 108, thereby outputting an optical signal in a single polarization state.

The polarizer may be disposed, not at the latter part of the polarization independence beam combiner 108 in the optical module 111, but at the tip of an optical fiber to which the collimator lens 109 with optical fiber for output is connected.

With the above-mentioned operation, light in an arbitrary polarization state can be converted into the TM polarized light. Once adjusting the optical attenuator 105, liquid crystal optical modulator 103, and optical path length adjuster 106 and stably realizing the conditions, the polarization state of the output can be stabilized independently of the polarization changing speed of the input light. Further, with an optical part with a low dependency on the wavelength, it is possible to stabilize in a lump the polarization states of light having different wavelengths or a plurality of light having different wavelengths.
Figs. 1 and 5 are one of embodiments. The point is that input light is split into two perpendicular polarization components, and the light is combined again with the same intensity and the same phase after rotating the polarizing direction of one polarization component at an angle of 90 degrees. The liquid crystal optical modulator 103, optical attenuator 105, optical path length adjuster 106, and polarizing rotation element 107 illustrated in the Figs 1 and 5 may be arranged at any position for realizing the above operation.

### [Second embodiment]

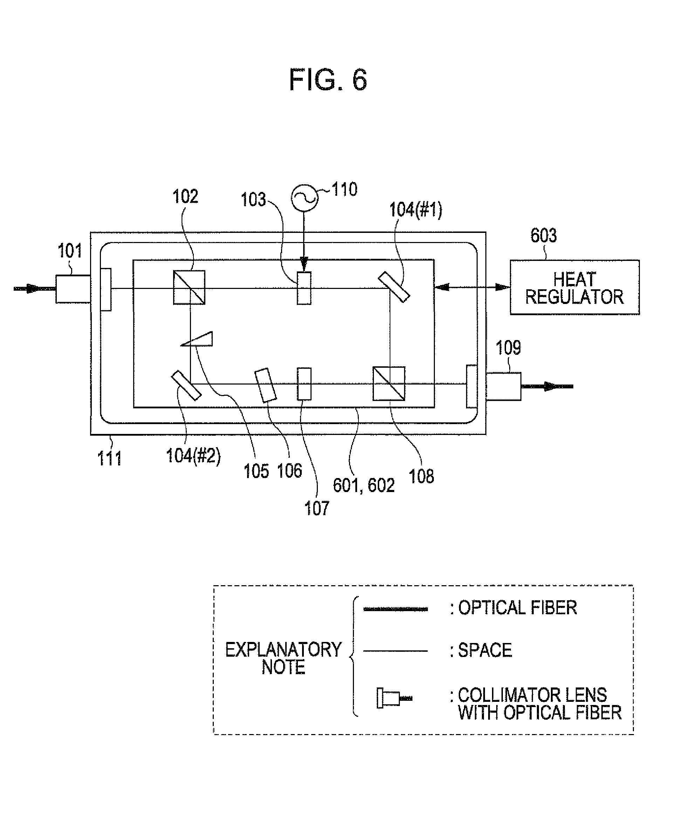

Fig. 6 is a diagram illustrating the structure according to the second embodiment. A portion designated by the same reference number in the structure in Fig. 1 according to the first embodiment is operated similarly to the case according to the first embodiment.

As mentioned above, importantly, the difference between the path lengths of the two paths 1 and 2 is kept constant with the accuracy for wavelength. However, it can vary depending on the change in peripheral environment, such as temperature of the optical module 111.

According to the second embodiment, as illustrated in Fig. 6, as technique for preventing an influence due to the environmental change, a function for keeping the temperature in the optical module 111 constant is added.
Specifically, a peltiert 601 and a thermistor 602 are attached to the bottom surface of the optical module 111, the thermistor 602 monitors the temperature of the optical module 111, and a temperature adjuster 603 controls current flowing to the peltiert 601 to keep the temperature constant. Then, the temperature of the optical module is stabilized and the change in environmental temperature enables the optical circuit to be stably operated.

### [Third embodiment]

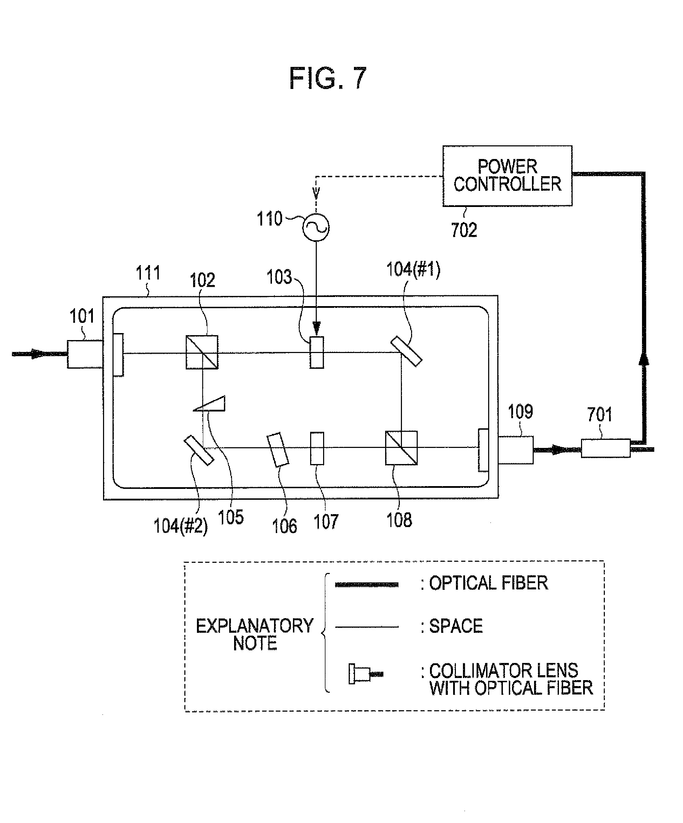

Fig. 7 is a diagram illustrating the structure according to the third embodiment. A portion with the same reference numeral as that illustrated in Fig. 1 according to the first embodiment is operated similarly to the case according to the first embodiment.

According to the third embodiment, the polarization state is further stably controlled as a structure example.
Referring to Fig. 7, an optical branch 701 branches a part of power of light outputted from the collimator lens 109 with optical fiber for output, and a power controller 702 monitors the power.

When the difference between the optical path lengths has a reverse phase, the output light is zero as mentioned above with reference to Fig. 4B, However, the difference between the optical path lengths periodically changes with one period of the optical wavelength, and the level of the optical output is based on a sine function. Therefore, a power controller 702 calculates a time differentiating coefficient of monitoring power changing in time, and the level of a voltage outputted from the AC voltage source 110 is controlled to set the time differentiating coefficient to zero, thereby maximizing the output power. The polarization independence beam combiner 108 always realizes an inphase condition (refer to Fig. 4A).

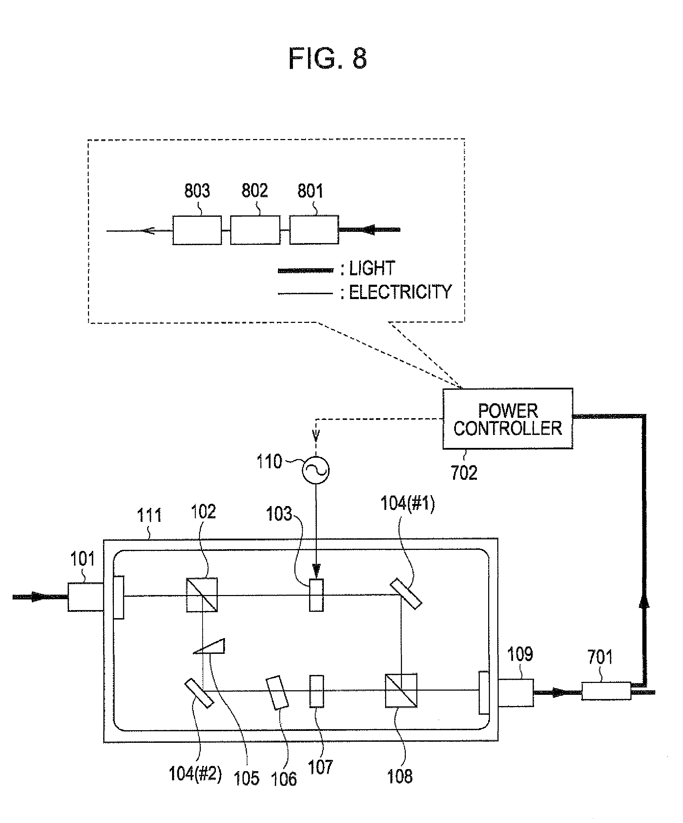

Fig. 8 is a diagram illustrating a specific structure of the power controller 702 illustrated in Fig. 7. Referring to Fig. 8, the power controller 702 comprises an optical power meter 801 that detects optical power obtained from the optical branch 701, a power-change monitoring unit 802 that is realized as a function of a personal computer and detects the power change from a power signal outputted by the optical power meter 801, and a differential output unit 803 that is similarly realized as a function of a personal computer and differentiates and outputs the power change outputted by the power-change monitoring unit 802. Further, a differential output signal outputted by the differential output unit 803 controls an output amplitude of the AC voltage source 110.

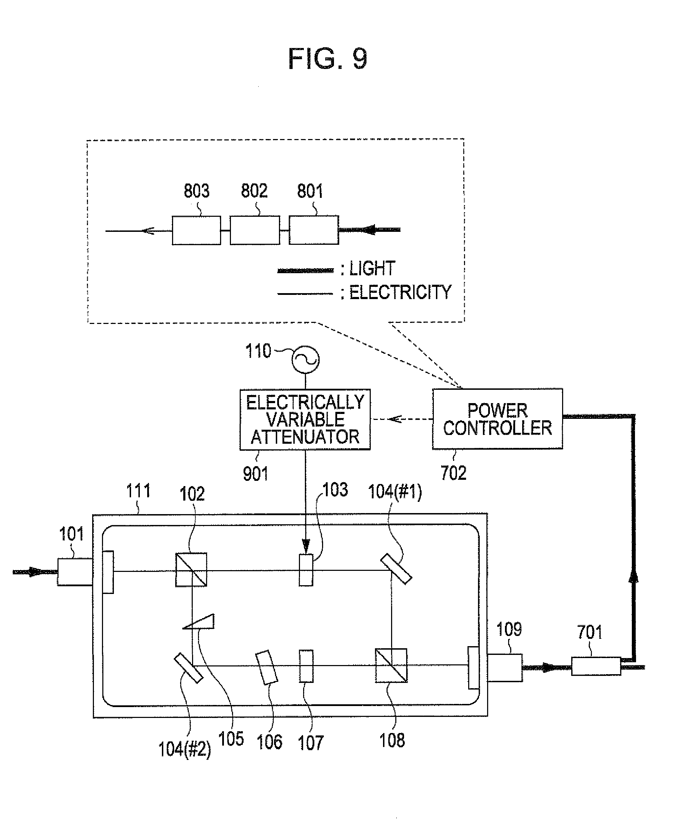

Fig. 9 is a diagram illustrating a modification of the structure illustrated in Fig. 8. Referring to Fig. 9, the differential output signal outputted from the differential output unit 803 is supplied to an electrical varying attenuator 901. Further, the electrical varying attenuator 901 controls the amplitude of an AC voltage with a constant amplitude outputted from the AC voltage source 110.

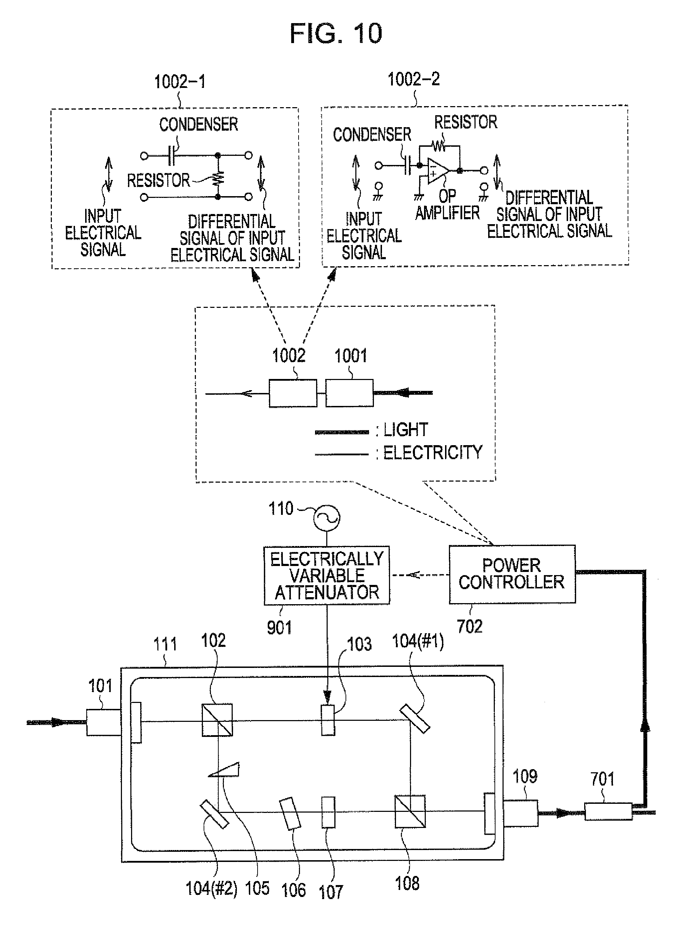

Fig. 10 is a diagram illustrating another modification of Figs. 8 and 9. Referring to Fig. 10, a photodetector 1001 converts an optical signal obtained from the optical branch 701 into an electrical signal. A differential electronic circuit 1002 executes differential operation of an electrical signal outputted from the photodetector 1001. A differential output signal outputted from the differential electronic circuit 1002 is supplied to the electrical varying attenuator 901 that controls the amplitude of the AC voltage having a constant amplitude outputted from the AC voltage source 110. The differential electronic circuit 1002 is simply realized by combination of a resistor and capacitor or a resistor, capacitor, and operational (OP) amplifier, as illustrated by 1001-1 or 1001-2.

With the structure illustrated in Figs. 8 to 10, the power of the optical output signal to be detected by the power controller 702 is changed with a low frequency corresponding to the difference between the paths irrespective of a transmission rate of the optical output signal. Therefore, fast response is not required to a detecting mechanism forming the power controller 702 with low costs.

### [Fourth embodiment]

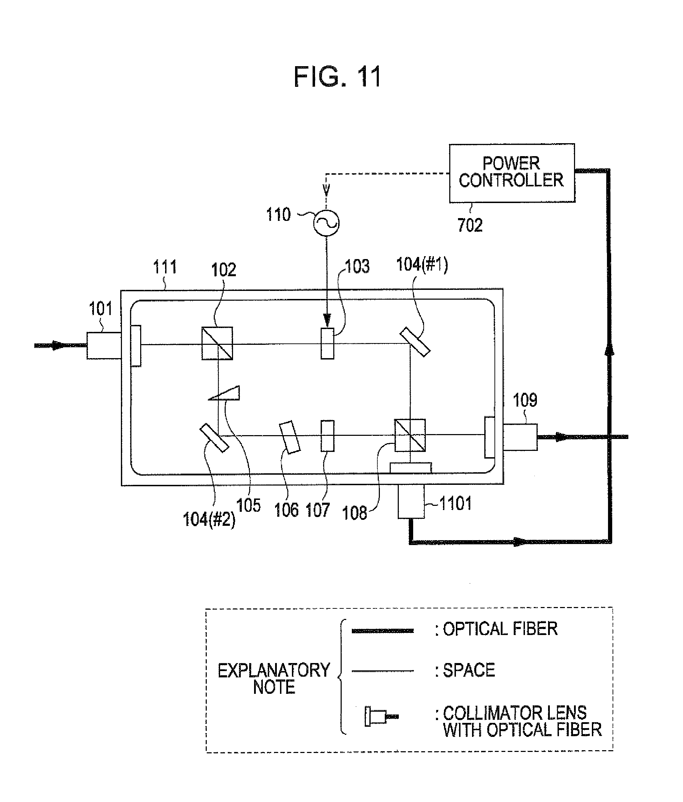

Fig. 11 is a diagram illustrating the structure according to the fourth embodiment. A portion designated by the same reference numeral as those illustrated in Figs. 1 and 7 according to the first and third embodiments performs the same operation as those according to the first and third embodiments. Further, the structure illustrated in Figs. 8 to 10 is applied to the power controller 702 illustrated in Fig. 11, similarly to the case illustrated in Fig. 7.

The polarization independence beam combiner 108 outputs the half light added in the down direction in Fig. 8. Then, this light is fetched by a collimator lens 801 with second optical fiber for output, and optical power thereof is monitored and is stabilized by the power controller 702.
In this case, the light branch operation may be not required at the latter stage of the collimator lens 109 with optical fiber for output, and the optical loss is therefore reduced.

### [Fifth embodiment]

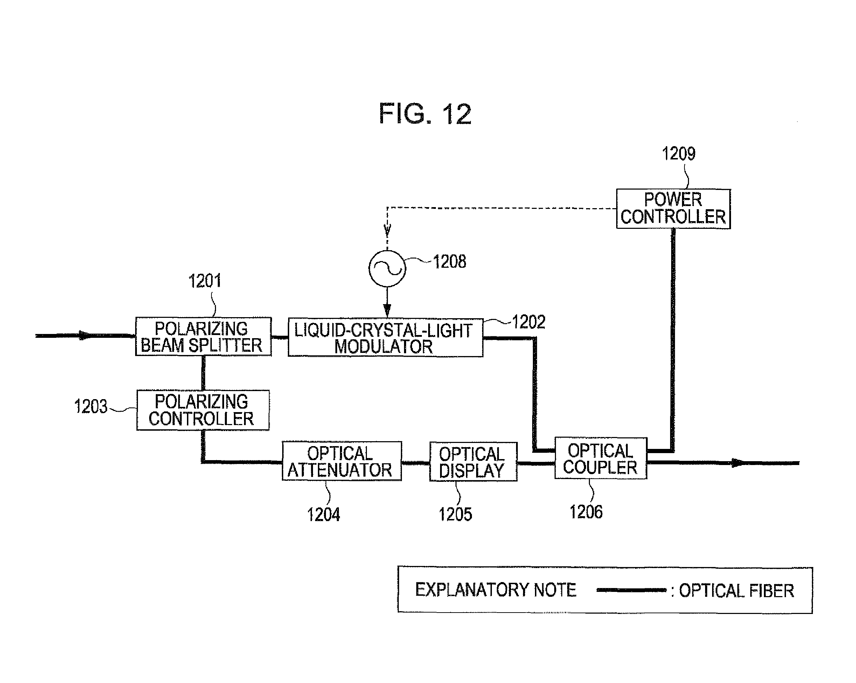

Fig. 12 is a diagram illustrating the structure according to the fifth embodiment. According to the first to fourth embodiments, an optical signal inputted from the optical fiber to the collimator lens 101 with optical fiber for input from the optical fiber is transmitted in the space of the optical module 111 until being outputted to the optical fiber from the collimator lens 109 with optical fiber for output again. According to the fifth embodiment, the optical signal inputted from the optical fiber to the polarizing beam splitter 1201 passes through the optical part with the combined optical fibers forming the paths, also after splitting the light to the two paths.

Specifically, the polarizing beam splitter 1201 combined to the optical fiber on the input side splits the input light into the TM polarization component and the TE polarization component, thereby guiding the light to two different paths.
Similarly to Fig. 1, upper optical path in Fig. 12 is defined as the path 1, light guided to the path 1 is the TM polarized light, a lower optical path is defined as the path 2, and light guided to the path 2 is the TE polarized light.

In the path 1 of Fig. 12, the liquid crystal optical modulator 1202 that performs the identical operation to that of the liquid crystal optical modulator 103 in Fig. 1 first finely adjusts a length for propagating the TM polarized light with accuracy such as nanometer level. The light output from the liquid crystal optical modulator 1202 is transmitted into the optical fiber, and an optical coupler 1206 couples the resultant light to the light propagated through the path 2 and outputs the coupled light to the optical fiber on the output side.

A polarization controller 1203 rotates the TE polarized light guided to the path 2 at an angle of 90 degrees, and converts the TE polarized light into the TM polarized light. The optical attenuator 1204 adjusts the optical power thereof, an optical delay 1205 coarsely adjusts the length for propagating the light, and an optical coupler 1206 couples the adjusted light to the light propagated through the path 1.

A power controller 1209 monitors the power of the light branched and outputted from the optical coupler 1206, calculates a time differential coefficient of monitoring power changing with time similarly to the case according to the third embodiment, and controls the level of the voltage outputted from an AC voltage source 1208 so as to set the time differential coefficient to zero, thereby realizing the inphase condition (refer to Fig. 4A) of the light through the paths 1 and 2 combined by the optical coupler 1206.

Although the fifth embodiment with the above-mentioned structure is similar to that according to the first embodiment, the optical fibers that combine the optical parts 1201 to 1206 are preferably short.
According to the fifth embodiment, there is a merit of no requirement of the two total-reflection mirrors 104 #1 and #2 required according to the first to fourth embodiments.

### [Sixth embodiment]

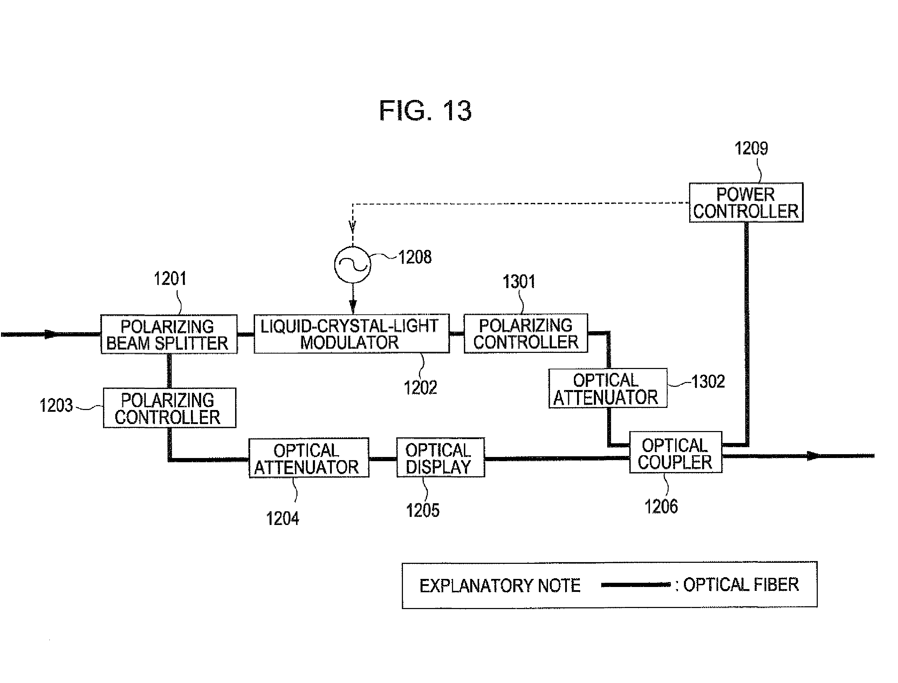

Fig. 13 is a diagram illustrating a modification of the structure according to the fifth embodiment illustrated in Fig. 12 according to the sixth embodiment.
According to the sixth embodiment, a polarization controller 1301 and an optical attenuator 1302 are inserted to the path 1 as well as the path 2, thus widely corresponding to the optical conditions of the paths 1 and path 2.

### [Seventh embodiment]

Even with the optical signal processing that is operated only in the polarization state of specific light, a polarization stabilizing circuit having any of the structures according to the first to sixth embodiments is disposed at the front part, thereby operating optical signal processing of light with single or a plurality of wavelengths in an arbitrary polarization state. There are optical signal processing depending on the polarization. Hereinbelow, signal processing is picked up as some examples and an overview thereof is illustrated according to the seventh to ninth embodiments. However, an application example is not limited to this.

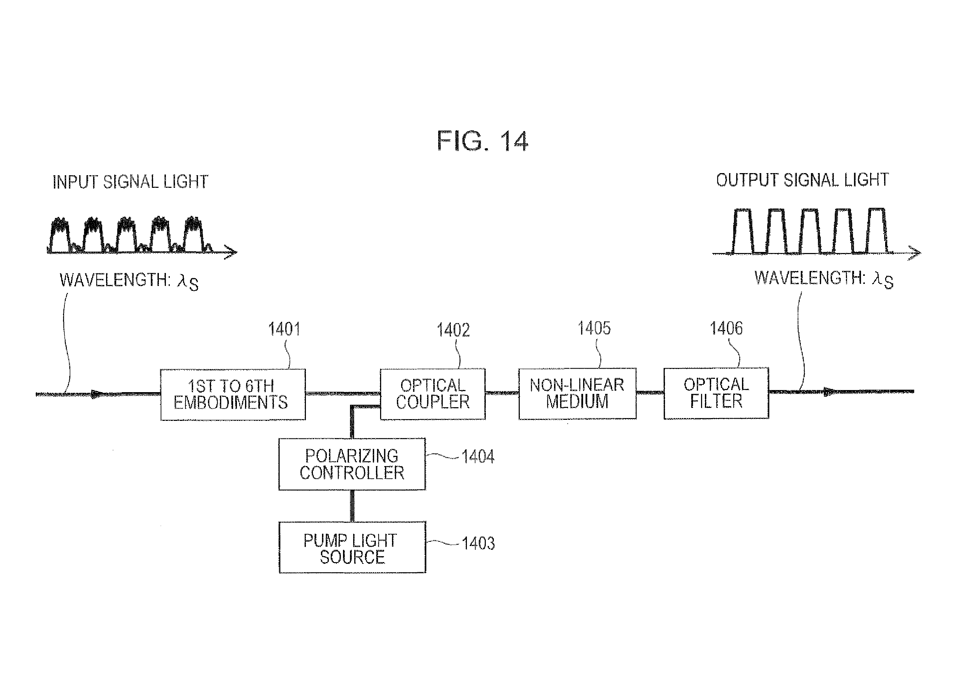

Fig. 14 is a diagram illustrating the structure according to the seventh embodiment.
Although a waveform of signal light is reshaped as light without conversion into an electrical signal as one of key technologies, the reshaping of optical waveform results in operation depending on the polarization in many cases. However, with the dependency on the polarization, a polarization stabilizing circuit having any of the structures according to the first to sixth embodiments is disposed at the front part of the shaping of optical waveform and the signal light in an arbitrary polarization state is stabilized to a specific polarization state, thereby realizing the operation independent of the polarization.

In an example illustrated in Fig. 14, the optical waveform is reshaped with an optical Kerr effect as a nonlinear effect caused in a nonlinear medium such as a silica-based highly-nonlinear fiber added with germanium and a chalcogenide glass.
An optical coupler 1402 couples input signal light whose polarization is stabilized by a polarization stabilizing circuit 1401 with any of the structures according to the first to sixth embodiments and pump light from a pump light source 1403 inputted via a polarization controller 1404. A waveform of the input signal light is reshaped with a phenomenon that a rate for energy shift from the pump light to the input signal light in a nonlinear medium optical fiber 1405 depends on power of the input signal light. An optical filter 1406 removes the pump light, and outputs output signal light.

The reshaping of optical waveform requires a condition of the same polarization state between the input signal light inputted to the nonlinear medium optical fiber 1405 and the pump light. Accordingly, the polarization stabilizing circuit 1401 with any of the structures according to the first to sixth embodiments greatly advantageously functions.

### [Eighth embodiment]

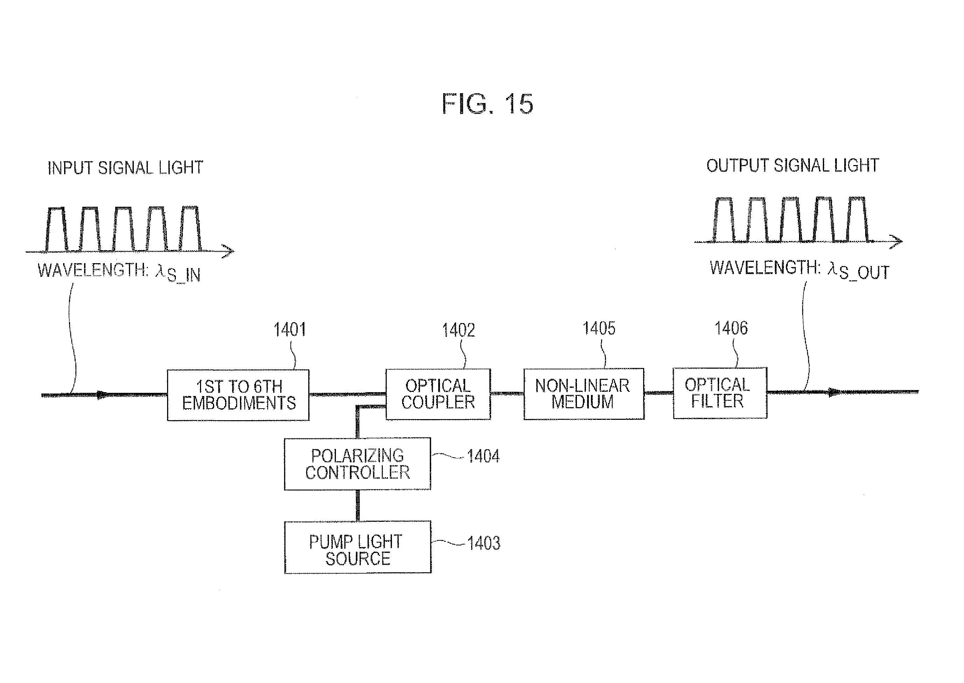

Fig. 15 is a diagram illustrating the structure according to the eighth embodiment.
As illustrated in Fig. 15, optical wavelength conversion as another optical signal processing is realized with the same circuitry structure according to the seventh embodiment illustrated in Fig. 14.

The current optical fiber communication increases a transfer capacity. Therefore, a WDM (Wavelength Division Multiplexing) communication system is widely used to multiplex signals in a wavelength area with light having a plurality of wavelengths. Further, in order to realize a flexible photonic network, a wavelength of signal light is advantageously converted, and effective wavelength conversion is required.

With an electronic circuit, wavelength conversion of a WDM signal first requires a photodetector that converts an optical signal into an electrical signal for individual wavelengths, after splitting the individual wavelengths, and a light source of different wavelengths and a data modulating function are inevitable for return to the optical signal. These signals are coupled in one fiber again and wavelength conversion of the WDM signal is thus needed.

Meanwhile, the optical signal processing enables conversion of wavelengths of the light in a lump with the nonlinear effect caused in the nonlinear medium. However, occurrence efficiency of the nonlinear effect generally depends on the polarization state of the signal light. Therefore, by converting the polarization state of a multiwavelength signal light into a specific state in a lump, a complicated polarization diversity structure is not required, thereby acquiring a simple structure.

Then, as illustrated in Fig. 15, a structure is extremely advantageous that the polarization stabilizing circuit 1401 having any of the structures according to the first to sixth embodiments is disposed at the front part of the nonlinear medium optical fiber 1405 for the purpose of the conversion of optical wavelength.

### [Ninth embodiment]

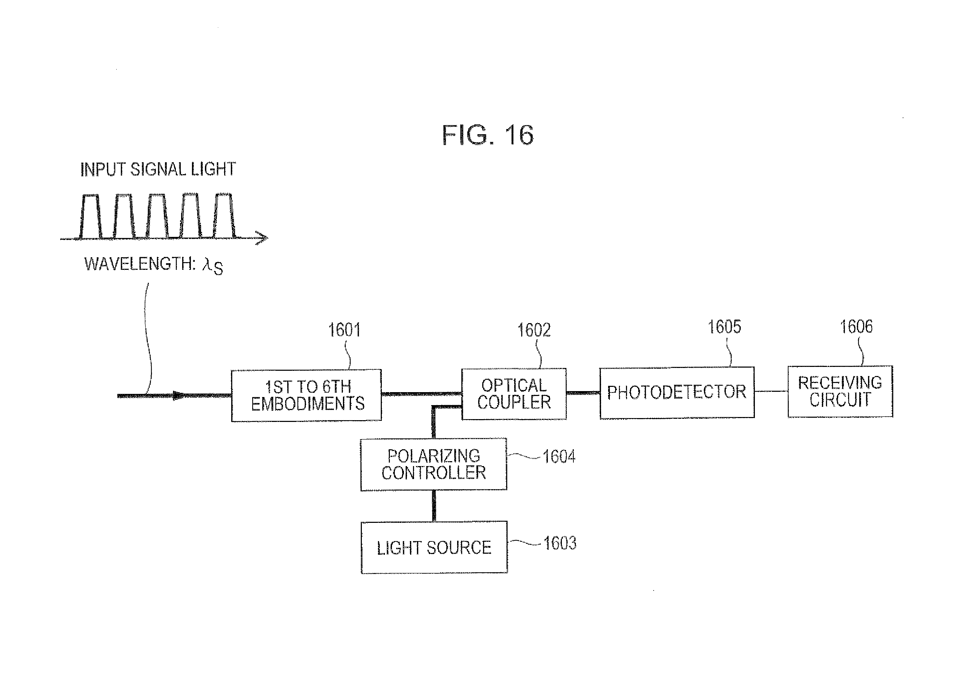

Fig. 16 is a diagram illustrating a structure according to the ninth embodiment.
As illustrated in Fig. 16, an optical coupler 1602 interferes, with the input signal light, local resonance light from a light source 1603 inputted via a polarization controller 1604 upon receiving the input signal light. In coherent reception via a photodetector 1605 using a receiving circuit 1606, the polarization states of both the light need to be always identical so that the input signal light interferes with the local resonance light. The input signal light is not always in a stable polarization state. Therefore, a polarization following function and a polarization diversity structure are generally required so that the polarization state of the local resonance light is identical to the polarization state of the input signal light.

Then, as illustrated in Fig. 16, a polarization stabilizing circuit 1601 having any of the structures according to the first to sixth embodiments is disposed at the front part of the optical coupler 1602, thereby always keeping the polarization state of the input signal light constant. Therefore, the polarization following function and polarization diversity are not required. This method is advantageous to the WDM signal light.

### [Complement to first to ninth embodiments]

In addition, there are optical multiplex splitting and optical sampling as the optical signal processing. Although individual descriptions are omitted here, it is possible to realize the operation independent of the polarization by disposing, at the front part, the polarization stabilizing circuit with any of the structures according to the first to sixth embodiments with the above-mentioned method, even if the processing depends on the polarization.

### [Advantages]

With a structure using stable space or optical fiber as an optical waveguide and a liquid crystal optical modulator for adjusting an optical length of light with high accuracy, according to a method for splitting the light into two perpendicular polarization components, rotating the polarization state of one polarization component at an angle of 90 degrees with the polarizing rotation element, and converting the polarization state to the same polarization state as that of the other polarization component, a complicated control circuit is not required. Further, the operation is possible independently of the changing speed of the optical polarization state, polarization stabilization is realized to enable the operation in response to light with a different wavelength, and an optical element/optical part depending on the polarization is generally operated independently of the polarization.

## Claims

1. An apparatus for outputting an outputting light having constant polarization state independently from any polarization state of an input light, the apparatus comprising:
a polarizing beam splitter for splitting the input light into a first light and a second light and for outputting the first light and the second light into optical paths, respectively, the first light having a first polarization, the second light having a second polarization having a perpendicular polarization direction to the first polarization;
a polarization rotator arranged in one of the optical paths and rotating polarized light of the light path by approximately 90 degree;
a first path length adjuster arranged in one of the optical paths and adjusting a difference path length between the optical paths in order to be approximately equal to zero;
a second path length adjuster arranged in one of the optical paths and adjusting a difference path length between the optical paths in order to be an integer multiple of a wavelength of the input light;
an optical attenuator arranged in one of the optical paths and adjusting a propagation loss of the optical path in order to approximately match the propagation losses of the optical paths;
an output element for combining the first light and the second light from the paths and for outputting the output light.

2. The apparatus of claim 1, wherein the polarizing beam splitter includes:
a first right angle prism having a coat on an inclined plane of the first right angle prism, the coat made by a dielectric multilayer film or a metallic thin film, and
a second right angle prism adhered to the first right angle prism in facing each of the inclined planes.

3. The apparatus of claim 1, wherein the second path length adjuster including a couple of transparent electrodes on glass plates, respectively; and a plurality of liquid crystal molecular between the couple of transparent electrodes, second optical path adjuster rotating the plurality of liquid crystal so as to applied voltage to the couple of transparent electrodes.

4. The apparatus of claim 1, wherein the polarization rotator is a Faraday rotator or a half wavelength plate.

5. The apparatus of claim 1, wherein the first path length adjuster includes a glass plate capable of rotating, the glass plate adjusting a propagation length of the optical path in the glass plate in order to rotate.

6. The apparatus of claim 1, wherein the first path length adjuster includes a wedge shaped glass capable of adjusting an optical path position so as to change a propagation length.

7. The apparatus of claim 1, wherein the optical attenuator is made by glass material, the optical attenuator having different transparency ratio on the bases of propagation positions of the optical path.

8. The apparatus of claim 1, wherein the output element includes:
a first right angle prism having a coat on an inclined plane of the first right angle prism, the coat made by a dielectric multilayer film or a metallic thin film, and
a second right angle prism adhered to the first right angle prism in facing each of the inclined planes.

9. The apparatus of claim 1, further comprising a polarizer arranged after the output element, the polarizer outputting an output light including a polarization state.

10. The apparatus of claim 1, further comprising an optical fiber arranged after the output element, the optical fiber including a polarizer outputting an output light including a polarization state.

11. The apparatus of claim 1, further comprising a temperature controller for controlling temperature on the optical paths in constant.

12. The apparatus of claim 1, further comprising:
a monitor for monitoring a power of the output light, and
a controller for controlling the second path length adjuster on the bases of the power detected by the monitor.

13. The apparatus of claim 1, further comprising an optical signal processer arranged after the output element, the optical signal processer processing a predetermined polarization of the output light from the output element.

14. The apparatus of claim 13, wherein the optical signal processer includes a non-linear medium for reforming a waveform of the output light.

15. The apparatus of claim 13, wherein the optical signal processer includes a non-linear medium for changing a wavelength of the output light.

16. The apparatus of claim 13, wherein the optical signal processer includes:
a light source for oscillating local resonance light; and
an interferometer causing interference between the output light from the output element and the local resonance light from the light emitter.

17. A polarization state stabilizing method for outputting an outputting light having constant polarization state independently from any polarization state of an input light, the method comprising:
splitting the input light into a first light and second light, the first light having a first polarization, the second light having a second polarization having a perpendicular direction of polarization to the first polarization;
inputting the first light and the second light into different optical paths, respectively;
rotating polarized light of one of the light paths by approximately 90 degree;
adjusting a path length in one of the optical paths in order to be approximately equal to zero;
adjusting a path length in one of the optical paths in order to be an integer multiple of a wavelength of the input light;
adjusting a propagation loss of the optical path in one of the optical paths in order to approximately match the propagation losses of the optical paths;
combining the first light and the second light from the paths; and
outputting a combined light as the outputted light.

18. The polarization state stabilizing method of claim 17, further comprising adjusting temperature on the optical paths in constant.

19. The polarization state stabilizing method of claim 17, further comprising:
monitoring a power of the output light, and
controlling the adjusting the path length on the bases of the power when the path length adjusts to be an integer multiple of a wavelength of the input light.

20. The polarization state stabilizing method of claim 17, further comprising executing an optical signal processing to a predetermined polarization of the output light.
